# EUROPÄISCHE PATENTSCHRIFT

(11) **EP 0 422 263 B1**
(45) Veröffentlichungstag und Bekanntmachung des Hinweises auf die Patenterteilung: **29.03.1995**
(21) Anmeldenummer: 89118762.7
(22) Anmeldetag: 10.10.1989
(51) Int. Cl.: F16H 49/00, B23Q 16/02, B23Q 16/06

(54) **Präzisions-Koppelgetriebe**
High precision positive transmission
Transmission positive à haute précision

(43) Veröffentlichungstag der Anmeldung: 17.04.1991
(73) Patentinhaber: Hofmann, Detlef, D-75108 Pforzheim (DE)
(72) Erfinder: Hofmann, Detlef, D-75108 Pforzheim (DE)
(74) Vertreter: Trappenberg, Hans

(56) Entgegenhaltungen:
- AU-B- 461 555
- DE-A- 2 243 722
- DE-A- 3 136 552
- GB-A- 983 721
- JP-A-59 140 937
- JP-A-59 170 549
- US-A- 2 959 065
- US-A- 3 842 947
- US-A- 4 189 961
- US-A- 4 552 037

## Beschreibung

Die Erfindung betrifft ein Präzisions-Koppelgetriebe zum Verdrehen einer auf einer Grundplatte angeordneten, das Ausgangsglied des Getriebes bildenden Tischplatte um eine senkrecht zur als Reaktionsglied des Getriebes gebildeten Grundplatte liegenden Achse, wobei das Getriebe zwei zueinander stehende, aneinander vorbeigleitende, jeweils mit den Platten verbundene, mit unterschiedlichen Zähnezahlen bei einer Mindestzähnezahl-Differenz von 1, radial, kegelig oder zylindrisch zu dieser Achse verzahnte Zahnkränze aufweist, deren benachbarte Zahnflanken aus symmetrisch aufeinander zulaufenden Ebenen bestehen, und in durch die Zahnflanken dieser Zahnkränze begrenzten Zahnlücken einschiebbaren Kugeln enthält, deren Durchmesser gleich oder kleiner als der Abstand der Zahnkämme der Zahnkranz-Verzahnung mit der größeren Zähnezahl ist.

Derartige Vorrichtungen sind insbesondere als Teiltische bekannt, bei denen das koppelnde Getriebe die Herstellung von Kreis- beziehungsweise Winkelteilungen um einen bestimmten einstellbaren Betrag erlauben muß. Hierbei werden sehr hohe Anforderungen an die Wiederholbarkeit der Teilung wie auch an die exakte Einstellmöglichkeit der Teilung gestellt. Eine weitere Forderung besteht darin, daß es möglich sein muß, sehr kleine Teilungen in der Größenordnung unter einem Winkelgrad herstellen zu können. Außerdem soll die Einstellung auch gegen verhältnismäßig große Kräfte (Stillstandsmoment) beibehalten werden. Schließlich wird auch noch gefordert, daß auf solchen Teiltischen auch verhältnismäßig schwere Werkstücke befestigt und gedreht werden können, wozu ein hohes Drehmoment erforderlich ist.

Bei bekannten Teiltischen sind beide Platten, sowohl die Grundplatte wie auch die Tischplatte, mit einer radialen Verzahnung versehen. Zum Einstellen des Teiltisches auf eine bestimmte Winkellage wird die Tischplatte abgehoben, in die gewünschte Lage geführt und dort wieder abgesetzt. Die bei einem solchen Teiltisch mögliche Winkelteilung ergibt sich damit aus der Zähnezahl, die auch hinwiederum nicht zu groß werden darf, damit noch ein einwandfreier Sitz gewährleistet ist mit einem den Anforderungen genügenden Haltemoment. Das Anheben der Tischplatte wird bei einer weiter bekannten Konstruktion nach dem US-Patent 3,714,848 dadurch vermieden, daß eine gegenseitige Arretierung der Platten bewirkende Kugeln in die in einem spitzen Winkel zueinander verlaufenden Verzahnungen eingeschoben werden. Außerdem bewirken die eingeschobenen Kugeln eine sichere Arretierung und lassen sehr genaue Winkelteilungen zu.

Dem Stand der Technik zuzuzählen ist auch die US-A-3,842,947, die eine Vorrichtung zum lösbaren Arretieren von zwei aneinander vorbeigleitenden Bauteilen, insbesondere Bauteilen des Präzisions-Maschinenbaues, beschreibt. Die Bauteile weisen hierbei vorzugsweise senkrecht zur Bewegungsrichtung liegende Kanäle mit sich nach oben öffnenden Wänden auf, wobei in je zwei gegenüberliegende Kanäle je eine die Kanalwände an je zwei Punkten berührende Kugel einschiebbar ist, so daß bei eingeschobener Kugel die beiden Bauteile gegenseitig spielfrei arretiert sind. Der Winkel der Kanalwände ist hierbei so bemessen, daß für den jeweils gewählten Werkstoff der Bauteile und der Kugeln Selbsthemmung auftritt. Auch bei sehr starken, etwa senkrecht auf die Kanalwände einwirkenden Kräften, werden also die Kugeln nicht aus den Kanälen herausgedrückt beziehungsweise die Bauteile sind sicher gegenseitig arretiert. Um ein erneutes Verschieben zu ermöglichen, müssen zuvor die Kugeln herausgedrückt beziehungsweise herausgezogen werden. Sind in den beiden aneinander vorbeigleitenden Bauteilen eine unterschiedliche Anzahl von Kanälen angeordnet, so können die Bauteile auch durch das Einschieben der Kugeln gegenseitig verschoben, im Endeffekt aber jeweils durch die eingeschobenen Kugeln über die 4-Punkt-Anlage arretiert werden.

Bekannt ist auch ein Getriebe mit einem sehr hohen Untersetzungsverhältnis nach der JP-A-59-170 549, bei dem ein elliptisches Innenrad in einem Kugelkäfig geführte Kugeln in die Innenverzahnung eines Außenrades hineindrückt, wobei die Anzahl der Kugeln kleiner als die Anzahl der Zahnkanäle ist. Dadurch werden beim Durchgang des elliptischen Innenrades nacheinander benachbarte Kugeln in die Verzahnung eingedrückt, wodurch sich eine Verdrehung des Außenrades ergibt.

Um die oben angeführte, sehr kleine, nach Möglichkeit gegen Null gehende Teilung, also eine kontinuierliche Einstellbarkeit bei exakter Wiederholbarkeit und hohem Stillstandsmoment zu erreichen, wird nach der Erfindung ein Präzisions-Koppelgetriebe nach der eingangs aufgeführten Bauart vorgeschlagen, das dadurch gekennzeichnet ist, daß ein um die gleiche Achse wie die Tischplatte verdrehbares Druckelement vorgesehen ist, das als eine um eine senkrecht zur Grundplatte liegende Achse um laufende Kurvenscheibe ausgebildet ist und auf die Kugeln einwirkt, um sie nacheinander in die durch die Zahnflanken begrenzten Zahnlücken einszuchieben, wobei der Winkel der Flanken zueinander oberhalb des Selbsthemmungswinkels für den jeweils gewählten Werkstoff für die Verzahnung und die Kugeln liegt und wobei sich die Kugeln unter Einschluß der Verzahnung in Umfangsrichtung gegenseitig abstützen und daß die Kurvenscheibe das Eingangsglied des Getriebes bildet.

Im Gegensatz also zu der Vorrichtung nach der US-PS 3,842,947 liegen die Winkel der Zahnflanken zueinander nicht im Bereich der Selbsthemmung, sondern oberhalb dieses Bereiches, so daß sich bei Druck auf die Zahnflanken eine die Kugeln nach außen drückende Kraft ergibt, die jedoch in diesem Falle von dem Druckelement aufgenommen wird. Trotzdem ist auch bei der erfindungsgemäßen Konstruktion eine sichere gegenseitige Arretierung der Platten gegeben, da sich die Kugeln unter Einschluß der Verzahnung in Umfangsrichtung gegenseitig abstützen. Werden die Kugeln durch das Druckelement mehr oder weniger tief in die Zahnlücken eingeschoben, verschieben sich die Platten gegenseitig, werden aber immer noch exakt in dieser gegenseitigen Verschiebelage gehalten. Damit ergibt sich ein Präzisions-Koppelgetriebe, das das Einstellen kleinster Winkelgrade erlaubt und auch sämtliche oben angeführten Forderungen erfüllt.

Bemerkenswert ist bei diesem Koppelgetriebe, außer der Erfüllung der oben angeführten Forderungen, die sehr hohe Untersetzungsmöglichkeit, die je nach Größe des Getriebes bis zu 500:1 gehen kann, die Möglichkeit auch mit recht hohen Drehzahlen, bis etwa 10.000 Umndrehungen pro Minute, anzutreiben und insbesondere auch die Spielfreiheit dieses Getriebes, die letztlich auch zu dem hohen Stillstands- beziehungsweise Haltemoment führt. Außerdem ist ein solches Getriebe selbstnachstellend durch das zur Anwendung kommende Keilschubprinzip und damit auch vollkommen vibrationsfrei. Da lediglich Rollkörper ein- und ausgeschoben beziehungsweise ein- und ausgerollt werden, ist ein derartiges Koppelgetriebe auch nahezu verschleißfrei und damit auch praktisch wartungsfrei. Bei entsprechender Werkstoffkombination kann es auch schmierstofffrei oder unter Wasser betrieben werden. Empfehlenswerte Werkstoffkombinationen sind hierbei neben Stahl auf Stahl auch Paarungen unter Verwendung von Edelstahl, Kunststoff oder Keramik. Ein besonderes Anwendungsgebiet des Getriebes nach der Erfindung ergibt sich auch durch die mögliche Nullpunkteinstellung, gegeben durch die hohe Untersetzungsmöglichkeit und das hohe Stillstandsmoment. Damit empfehlen sich derartige Getriebe auch sehr zur Robotersteuerung.

Ausgestaltungen dieses Erfindungsgedankens sind in den weiteren Unteransprüchern angeführt.

Auf der Zeichnung sind Ausführungsbeispiele der Erfindung schematisch dargestellt, und zwar zeigen:
- Fig. 1: einen mit dem erfindungsgemäß ausgeführten Präzisions-Koppelgetriebe versehenen Teiltisch im Querschnitt; und
- Fig. 2: den Kugeleingriff.

Auf der Grundplatte (1) eines Teiltisches ist eine verdrehbare Tischplatte (2) aufgebaut. Die Grundplatte (1) ist mit einem Zahnkranz (3), die Tischplatte (2) mit einem weiteren Zahnkranz (4) verbunden. Zwischen diese beiden Zahnkränze (3, 4) werden Kugeln (5) durch ein verdrehbares Druckelement (7) mehr oder weniger eingeschoben. Das Druckelement (7) wird hierbei durch einen Motor (8) verdreht.

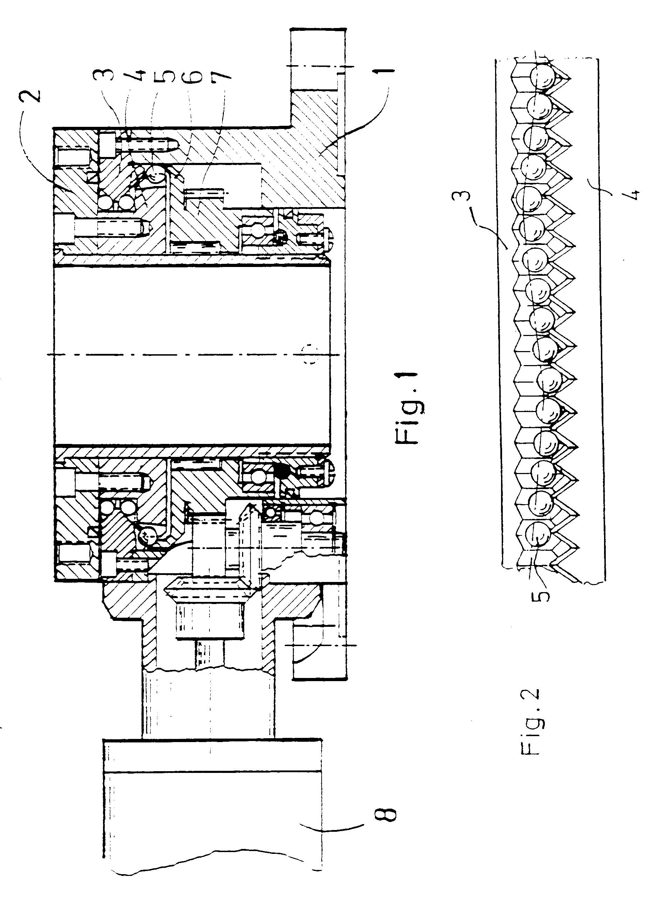

Beim Drehen dieses Druckelementes (7) werden die Kugeln (5), wie dies in Fig. 2 angedeutet ist, mehr oder weniger tief in die Zahnlücken zwischen den beiden Zahnkränzen (3, 4) eingeschoben, wodurch sich die Tischplatte (2) gegenüber der Grundplatte verdreht. Hierbei wird die Drehbewegung des Motors (8) sehr hoch ins Langsame untersetzt, so daß eine exakte und kleine Teilung möglich ist.

## Patentansprüche

1. Präzisions-Koppelgetriebe zum Verdrehen einer auf einer Grundplatte angeordneten, das Ausgangsglied des Getriebes bildenden Tischplatte um eine senkrecht zur als Reaktionsglied des Getriebes gebildeten Grundplatte liegenden Achse, wobei das Getriebe zwei zueinander stehende, aneinander vorbeigleitende, jeweils mit den Platten verbundene, mit unterschiedlichen Zähnezahlen bei einer Mindestzähnezahl-Differenz von 1, radial, kegelig oder zylindrisch zu dieser Achse verzahnte Zahnkränze aufweist, deren benachbarte Zahnflanken aus symmetrisch aufeinander zulaufende Ebenen bestehen, und in durch die Zahnflanken dieser Zahnkränze begrenzten Zahnlücken einschiebbaren Kugeln enthält, deren Durchmesser gleich oder kleiner als der Abstand der Zahnkämmme der Zahnkranzverzahnung mit der größeren Zähnezahl ist,
dadurch gekennzeichnet,
daß ein um die gleiche Achse wie die Tischplatte (2) verdrehbares Druckelement (7) vorgesehen ist, das als eine um eine senkrecht zur Grundplatte liegende Achse umlaufende Kurvenscheibe ausgebildet ist und auf die Kugeln (5) einwirkt, um sie nacheinander in die durch die Zahnflanken begrenzten Zahnlücken einzuschieben, wobei der Winkel der Flanken zueinander oberhalb des Selbsthemmungswinkels für den jeweils gewählten Werkstoff für die Verzahnung und die Kugeln liegt und wobei sich die Kugeln (5) unter Einschluß der Verzahnung in Umfangsrichtung gegenseitig abstützen,
und daß die Kurvenscheibe (7) das Eingangsglied des Getriebes bildet.

2. Koppelgetriebe nach Anspruch 1,
dadurch gekennzeichnet,
daß die Zahnflanken in Richtung auf die Achse und/oder in Richtung vom Zahngrund zum Zahnkopf konkav oder konvex gewölbt sind.

3. Koppelgetriebe nach Anspruch 1,
dadurch gekennzeichnet,
daß der Zahnlückengrund gerade oder exponentiell ansteigt.

## Claims

1. A precision coupling transmission for rotating a table plate which is arranged on a base plate and which forms the output member of the transmission, about an axis which is disposed perpendicularly to the base plate which is in the form of a reaction member of the transmission, wherein the transmission has two gear rings which face towards each other and which slide past each other and which are respectively connected to the plates and which are toothed in radial, bevel or cylindrical relationship with said axis, with different numbers of teeth with a minimum tooth number difference of 1, the adjacent tooth flanks of the gear rings comprising planes which extend symmetrically towards each other, and the transmission includes balls which can be inserted into tooth gaps defined by the tooth flanks of said gear rings and whose diameter is equal to or smaller than the spacing of the tooth crests of the gear ring tooth configuration with the larger number of teeth, characterised in that there is provided a pressure element (7) which is rotatable about the same axis as the table plate (2) and which is in the form of a cam disc rotating about an axis disposed perpendicularly to the base plate and which acts on the balls (5) in order to push them successively into the tooth gaps defined by the tooth flanks, wherein the angle of the flanks relative to each other is above the self-locking angle for the respectively selected material for the tooth configuration and the balls and wherein the balls (5) mutually support each other with the inclusion of the tooth configuration, in the peripheral direction, and that the cam disc (7) forms the input member of the transmission.

2. A coupling transmission according to claim 1 characterised in that the tooth flanks are concavely or convexly curved in a direction towards the axis and/or in the direction from the tooth base to the tooth tip.

3. A coupling transmission according to claim 1 characterised in that the tooth gap base rises straight or exponentially.

## Revendications

1. Transmission positive à haute précision pour faire tourner un plateau, disposé sur un socle et constituant l'organe de sortie de la transmission, autour d'un axe perpendiculaire au socle conçu comme organe réactif de la transmission, cette transmission présentant deux couronnes dentées en vis-à-vis, glissant l'une contre l'autre, respectivement assemblées au plateau et au socle et à denture radiale, conique ou cylindrique par rapport audit axe, avec des nombres respectifs de dents différents au moins de 1, dont les flancs de dents voisins consistent en des plans se rencontrant symétriquement, et cette transmission contenant des billes qui peuvent être enfoncées dans les entredents délimités par les flancs de dents de ces couronnes dentées et dont le diamètre est inférieur ou égal à l'écartement des sommets des dents de la denture de la couronne dentée présentant le plus grand nombre de dents,
**caractérisée** en ce qu'il est prévu un élément de pression (7) pouvant être mis en rotation autour du même axe que le plateau (2), élément qui est réalisé sous la forme d'un disque à came en révolution autour d'un axe perpendiculaire au socle et qui agit sur les billes (5) pour les enfoncer successivement dans les entredents délimités par les flancs des dents, l'angle formé entre eux par les flancs étant supérieur à l'angle d'autoblocage pour le matériau respectivement choisi pour la denture et les billes, et les billes (5) s'appuyant les unes contre les autres en direction circonférentielle en incluant la denture,
et en ce que le disque à came (7) constitue l'organe d'entrée de la transmission.

2. Transmission positive selon la revendication 1, **caractérisée** en ce que les flancs de dents sont réalisés à courbure concave ou convexe dans la direction de l'axe et/ou dans la direction allant du pied de dent à la tête de dent.

3. Transmission positive selon la revendication 1, **caractérisée** en ce que le fond des entredents présente une pente à ascendance linéaire ou exponentielle.
